# EUROPÄISCHE PATENTSCHRIFT

(11) **EP 2 381 226 B1**
(45) Veröffentlichungstag und Bekanntmachung des Hinweises auf die Patenterteilung: **28.10.2015**
(21) Anmeldenummer: 11001345.5
(22) Anmeldetag: 18.02.2011
(51) Int. Cl.: G01F 1/84, G01F 15/00, G01F 15/14

(54) **Coriolis-Massedurchflussmessgerät**
Coriolis mass flow measuring device
Débitmètre massique du type Coriolis

(30) Priorität: 23.04.2010 DE 102010018223
(43) Veröffentlichungstag der Anmeldung: 26.10.2011
(73) Patentinhaber: KROHNE Messtechnik GmbH, 47058 Duisburg (DE)
(72) Erfinder: Kolahi, Kourosh, 47051 Duisburg (DE); Poremba, Andreas, 42107 Wuppertal (DE)
(74) Vertreter: Gesthuysen Patent- und Rechtsanwälte

(56) Entgegenhaltungen:
- DE-A1-102006 013 601
- DE-U1-202006 003 348
- US-A1- 2003 097 884
- US-A1- 2005 035 867
- US-B1- 6 748 813

## Beschreibung

Die Erfindung betrifft ein Coriolis-Massedurchflussmessgerät, mit wenigstens einer Sensoranordnung, wenigstens einem Messumformer und wenigstens einem Gehäuse, wobei die Sensoranordnung wenigstens ein zu Schwingungen anregbares Messrohr, wenigstens einen Schwingungserzeuger und wenigstens einen Schwingungsaufnehmer aufweist, wobei der Messumformer zumindest teilweise die Auswerte- und Leistungselektronik zur Ansteuerung und messtechnischen Auswertung der Sensoranordnung aufweist, wobei die Sensoranordnung und der Messumformer benachbart zueinander in einem gemeinsamen durch das Gehäuse definierten Volumen angeordnet sind.

Coriolis-Massedurchflussmessgeräte der vorgenannten Art sind beispielsweise aus der DE 10 2008 007 742 A1 bekannt. Bei Coriolis-Massedurchflussmessgeräten wird ganz allgemein das von einem Medium durchströmbare Messrohr durch den Schwingungserzeuger zu einer Schwingung angeregt, vorzugsweise in einer bestimmten Eigenform in Resonanzfrequenz. Ein- und auslaufseitig wirken sich Trägheitskräfte unterschiedlich auf das in dem zu Schwingungen angeregten Messrohr auf das strömende Medium und damit auf das Messrohr aus, so dass die Auslenkung des Messrohres ein- und auslaufseitig unterschiedlich beeinflusst wird, und so die ein- und auslaufseitig mit zumeist an verschiedenen Positionen angeordneten Schwingungsaufnehmern erfassten Schwingungen des Messrohres eine Phasenverschiebung aufweisen, die ein unmittelbares Maß für den interessierenden Massedurchfluss ist und die eigentliche, durch die Auswerteelektronik zu erfassende, abgeleitete Messgröße ist. Der Messumformer umfasst hier ebenfalls die zur Ansteuerung der Schwingungserzeuger erforderliche Leistungselektronik, wobei die Schwingungserzeuger üblicherweise aus elektromagnetischen Stellgliedern bestehen, die das durchströmte Messrohr in Resonanzfrequenzen periodisch anregen. Diese Funktionsweise ist praktisch allen Coriolis-Massedurchflussmessgeräten gemein, unabhängig davon, ob die Sensoranordnung und der Messumformer benachbart zueinander in einem gemeinsamen Gehäuse und in einem gemeinsamen durch das Gehäuse definierten Volumen angeordnet sind, oder ob die Sensoranordnung und der Messumformer - wie bei den allermeisten Coriolis-Massedurchflussmessgeräten üblich - in unterschiedlichen Volumina verschiedener Gehäuse angeordnet sind.

Die viel üblichere Ausgestaltung von Coriolis-Massedurchflussmessgeräten, bei der die Sensoranordnung und der Messumformer getrennt voneinander in unterschiedlichen Gehäusevolumina realisiert sind, weist verschiedene Vorteile auf, die mit der räumlichen Trennung von Messumformer und Sensoranordnung zu tun haben, wie beispielsweise die separate Austauschbarkeit des mechanischen Messaufbaus - Sensoranordnung - und der Messgeräteelektronik - Messumformer - und die durch die räumliche Trennung an sich bewirkte thermische Entkopplung insbesondere von Messrohren und dem Messumformer. Zu berücksichtigen ist dabei, dass bei bestimmten Anwendungen, bei denen Coriolis-Massedurchflussmessgeräte eingesetzt werden, hohe Mediumtemperaturen und/oder hohe Temperaturschwankungen vorliegen, entweder weil der Prozess grundsätzlich derartige Temperaturen erfordert oder weil temporär derartige Temperaturverhältnisse geschaffen werden müssen, beispielsweise bei Desinfektions- bzw. Sterilisationsläufen des Prozesses und damit auch des Coriolis-Massedurchflussmessgerätes. Durch die räumliche Trennung von Sensoranordnung und Messumformer wird unabhängig von der thermischen Entkopplung auch eine elektrische und magnetische Entkopplung zwischen dem Messumformer und den elektrisch und/oder magnetisch relevanten Bestandteilen der Sensoranordnung, also den Schwingungserzeugern, bewirkt.

Gattungsgemäße Coriolis-Massedurchflussmessgeräte sind von ihrem Aufbau kompakter und können aufgrund der geschlossenen Bauart robuster ausgeführt sein. Bei den gattungsgemäßen Coriolis-Massedurchflussmessgeräten, bei denen die Sensoranordnung und der Messumformer im Gegensatz zu der vorgenannten Konstruktionsweise benachbart zueinander in einem gemeinsamen durch das Gehäuse definierten Volumen angeordnet sind, wechselwirken die Sensoranordnung und der Messumformer aufgrund der relativen Nähe zueinander in stärkerem Maße, was insgesamt problematisch sein kann, insbesondere hinsichtlich der Einhaltung bestimmter Messgenauigkeiten, an die insbesondere bei Coriolis-Massedurchflussmessgeräten hohe Anforderungen gestellt werden; so wird für Coriolis-Massedurchflussmessgeräte häufig eine Genauigkeit von unter 0,04 % vom Messwert für den Massedurchfluss gefordert.

Bei Ausgestaltungen von Coriolis-Massedurchflussmessgeräten gemäß dem Stand der Technik finden sich teilweise Elemente, die explizit einer Unterdrückung einer physikalischen Wechselwirkung von Komponenten des Messgerätes dienen sollen, und teilweise auch Elemente, die sich im Hinblick auf eine solche Wirkung verstehen lassen können, Die US 2003/0097884 A1 beschreibt eine elektronische Einheit eines Coriolis-Massedurchflussmessgerätes, in der eine thermische Barriere vorgesehen ist. Das Coriolis-Massedurchflussmessgeräte der DE 10 2006 013 601 A1 verfügt über eine Sensor- und eine Elektronikanordnung, zwischen denen sich ein gegenüber den beiden Anordnungen verjüngtes Halsstück befindet. Ein ähnliches Halsstück offenbart die US 2005/0035867 A1. Bei der US 6,748,813 B1 befindet sich das Messrohr innerhalb eines evakuierten Gehäuses. Bei einem Messgerät der DE 20 2006 003 348 U1 ist eine Elektronikeinrichtung durch einen Verguß verkapselt.

Es ist daher Aufgabe der vorliegenden Erfindung ein Coriolis-Massedurchflussmessgerät der vor beschriebenen Art anzugeben, also ein Coriolis-Massedurchflussmessgerät, bei dem die Sensoranordnung und der Messumformer benachbart zueinander in einem gemeinsamen durch das Gehäuse definierten Volumen angeordnet sind, bei dem die physikalische Wechselwirkung zwischen Sensoranordnung und Messumformer auf ein zuträgliches Maß reduziert wird.

Gemäß der Erfindung ist die zuvor beschriebene und hergeleitete Aufgabe dadurch gelöst, dass zumindest im Zwischenraum zwischen der Sensoranordnung und dem Messumformer eine thermische Barriere angeordnet ist, dass zumindest im Zwischenraum zwischen dem Messumformer und dem Gehäuse eine thermische Brücke zur Abführung von Wärme von dem Messumformer auf das Gehäuse angeordnet ist, dass um den Messumformer zumindest im Zwischenraum zwischen dem Messumformer und der Sensoranordnung eine elektrische und/oder magnetische Abschirmung angeordnet ist, und dass die elektrische und/oder magnetische Abschirmung zwischen einem inneren Teil der thermischen Brücke und einem äußeren Teil der thermischen Brücke angeordnet ist. Dabei dient diese thermische Barriere zur Hemmung des Wärmetransports zwischen der Sensoranordnung und dem Messumformer, insbesondere zur Verschlechterung des Wärmeübergangs zwischen dem Messrohr der Sensoranordnung und dem Messumformer. Wenn davon die Rede ist, dass die thermische Barriere zumindest im Zwischenraum zwischen der Sensoranordnung und dem Messumformer vorgesehen ist, dann ist damit vor allem der Raum gemeint, der bei kürzester gedachter Verbindung zwischen der Sensoranordnung und dem Messumformer durchkreuzt wird. Wenn der Messumformer - wie üblich - auf bzw. mit einer Platine realisiert ist, dann ist mit dem Zwischenraum zwischen der Sensoranordnung und dem Messumformer folglich der Raum zwischen dem Messrohr der Sensoranordnung und der Platine des Messumformers gemeint, insbesondere der Raumanteil des durch das Gehäuse definierten Volumens, der bei kürzester gedachter Verbindung zwischen Messrohr und als Platine realisiertem Messumformer überstrichen wird. Die erfindungsgemäße Anordnung einer thermischen Barriere in diesem Bereich verringert den Wärmeübergang zwischen Messumformer und Sensoranordnung, so dass die thermische Wechselwirkung reduziert wird.

Als besonders vorteilhaft hat sich herausgestellt, wenn die thermische Barriere so mit dem Gehäuse verbunden ist, dass das Volumen des Gehäuses in ein die Sensoranordnung umfassendes erstes Teilvolumen und ein den Messumformer umfassendes zweites Teilvolumen aufgeteilt ist. Dabei kommt es nicht unbedingt darauf an, dass das erste Teilvolumen und das zweite Teilvolumen nirgends miteinander verbunden sind, von Bedeutung ist hier aber, dass die Volumina vor allem im Zwischenraum zwischen der Sensoranordnung und dem Messumformer als voneinander unterscheidbare und getrennte Volumina realisiert sind.

Dadurch, dass erfindungsgemäß zumindest im Zwischenraum zwischen dem Messumformer und dem Gehäuse eine thermische Brücke zur Abführung von Wärme von dem Messumformer auf das Gehäuse angeordnet ist, wird erreicht, dass ein Temperaturausgleich zwischen dem Messumformer und dem Gehäuse möglich ist, wobei der Temperaturausgleich zwischen dem Gehäuse und der Umgebung von den Umgebungsbedingungen abhängt bzw. von Maßnahmen, die außerhalb des Gehäuses realisiert sind, was hier jedoch nicht Gegenstand der Betrachtung ist.

Wenn vorliegend davon die Rede ist, dass die thermische Brücke zumindest im Zwischenraum zwischen dem Messumformer und dem Gehäuse realisiert ist, dann ist damit wiederum der Bereich des durch das Gehäuse definierten Volumens - also Innenraums - gemeint, der im Wesentlichen von den kürzesten, direkten - also ohne dass die Sensoranordnung in diesem Weg liegt-Verbindungen zwischen dem Messumformer und dem Gehäuse durchkreuzt wird.

Dabei, dass die thermische Brücke zumindest teilweise durch einen thermisch leitenden Verguss des Messumformers realisiert ist, ist mit "zumindest teilweise" gemeint, dass die thermische Brücke auch noch weitere Komponenten umfassen kann, die an der Wärmeleitung teilhaben. Der Vorteil eines thermisch leitenden Vergusses besteht darin, dass die häufig unterschiedlich großen elektrischen Bauteile des Messumformers ihre Verlustwärme direkt an das Vergussmaterial abgeben, ohne dass Gefahr besteht, dass die Abwärme durch Konvektion oder Radiation in den gesamten Gehäuseinnenraum abstrahlt bzw. abgegeben wird, der thermische Verguss "bindet" die Abwärme gleichsam räumlich und leitet sie durch seine geometrische Formgebung gezielt weiter.

Gemäß einer weiteren vorteilhaften Ausgestaltung der Erfindung ist vorgesehen, dass die thermische Brücke zumindest teilweise durch ein rigides Versteifungselement realisiert ist bzw. als rigides Versteifungselement wirkt, wobei dieses Versteifungselement bevorzugt flächig an das Gehäuse anliegend realisiert ist. Das Versteifungselement kann beispielsweise durch zwei Edelstahlplatten umgesetzt werden, die starr mit der Abschirmung verbunden, in das Gehäuse eingeschoben und unter mechanische Spannung mit dem Gehäuse montiert und an dem Gehäuse fixiert sind; die Fixierung erfolgt bevorzugt durch Anheften (punktförmiges Schweißen). Durch ein solche Konstruktion wird sichergestellt, dass eine mechanisch sichere Verbindung zwischen dem Messumformer und dem Gehäuse hergestellt wird, nämlich die Nachgiebigkeit der Wandungen des Gehäuse unterbunden wird. Als besonders vorteilhaft hat sich herausgestellt, wenn die vorgenannte Maßnahme der Realisierung eines thermisch leitenden Vergusses und die Realisierung einer nicht nachgebende Verbindung zwischen dem Messumformer und dem Gehäuse, die beispielsweise als Edelstahlplatte zwischen dem thermischen Verguss um den Messumformer und einer Gehäusewand angeordnet ist, vorgesehen sind, da so auf einfachem Wege eine Kombination der beschriebenen Vorteile möglich ist.

Bei der Formulierung, dass um den Messumformer zumindest im Zwischenraum zwischen dem Messumformer und der Sensoranordnung eine elektrische und/oder magnetische Abschirmung angeordnet ist, liegt genau das gleiche Verständnis des "im Zwischenraum angeordnet sein" zugrunde, wie dies zuvor bereits beschrieben worden ist. Als besonders vorteilhaft hat sich herausgestellt, wenn sich die elektrische und/oder magnetische Abschirmung auch in den Zwischenraum zwischen dem Messumformer und dem Gehäuse erstreckt, da so eine sichere und umfassende Abschirmung gewährleistet werden kann. Insbesondere im Zusammenhang mit der vorgenannten Abschirmung ist gemäß einer bevorzugten Ausgestaltung der Erfindung vorgesehen, dass die elektrische und/oder magnetische Abschirmung aus einem thermisch gut leitfähigen Material besteht, insbesondere aus einem weichmagnetischen Werkstoff hoher magnetischer Permeabilität. Dadurch wird die elektrische und/oder magnetische Abschirmung im Bereich zwischen dem Messumformer und dem Gehäuse gleichsam auch zu einer thermischen Brücke zwischen Messumformer und dem Gehäuse.

Die beschriebenen Maßnahmen lassen sich sämtlich besonders vorteilhaft bei solchen Coriolis-Massedurchflussmessgeräten verwirklichen, bei denen das Messrohr der Sensoranordnung gebogen ist, insbesondere U- oder V-förmig ist, und bei denen der Messumformer zwischen den U- bzw. V-Schenkeln des Messrohrs oder der Messrohre angeordnet ist; hier ist unmittelbar einleuchtend, dass Messumformer und Sensoranordnung benachbart zueinander angeordnet sind, insbesondere, wenn das Gehäuse die Sensoranordnung, die ja die äußere Abmessung des Coriolis-Massedurchflussmessgeräts konstruktiv vorgibt, eng umgibt, um eine kompakte Bauform zu erreichen.

Durch die gemeinsame Realisierung von den drei verschiedenen Maßnahmen - thermische Barriere, thermische Brücke, elektrische und/oder magnetische Abschirmung - in einem erfindungsgemäßen Coriolis-Massedurchflussmessgerät kann in umfassender Weise eine physikalische Entkopplung bzw. gewünschte Kopplung - thermische Brücke - erzielt werden

Erfindungsgemäß ist vorgesehen, dass die elektrische und/oder magnetische Abschirmung zwischen einem inneren Teil der thermischen Brücke und einem äußeren Teil der thermischen Brücke angeordnet ist, insbesondere wobei der innere Teil der thermischen Brücke als den Messumformer unmittelbar umgebender Verguss realisiert ist, insbesondere wobei der äußere Teil der thermischen Brücke als wenigstens ein Versteifungselement zwischen der elektrischen und/oder magnetischen Abschirmung und dem Gehäuse realisiert ist. Es hat sich als besonders vorteilhaft herausgestellt, wenn die vorgenannten Maßnahmen dazu verwendet werden, das Gehäuse des Coriolis-Massedurchflussmessgeräts zu versteifen, wenn also die thermische Barriere und/oder die thermische Brücke und/oder die elektrische und/oder magnetische Abschirmung mit dem Gehäuse verbunden ist und derart eine mechanische Versteifung erreicht wird. Dabei wird bei der Verbindung mit dem Gehäuse insbesondere darauf geachtet, dass die Resonanzfrequenzenen des Gehäuses außerhalb des Arbeitsfrequenzbereiches verschoben werden, so dass durch die vorgenommene Versteifung auch eine mechanische Entkopplung von der Sensoranordnung realisiert werden kann. Dabei wird die Resonanzfrequenz des durch die Verbindung beeinflussten Gehäuses insbesondere so ausgelegt, dass sie um wenigstens eine Dekade höher ist als die Betriebsfrequenz des Coriolis-Massedurchflussmessgeräts. Gemäß einer vorteilhaften Weiterbildung der Erfindung lässt sich eine besonders wirksame Versteifung dadurch erreichen, dass die thermische Barriere und/oder die thermische Brücke und/oder die elektrische und/oder magnetische Abschirmung wenigstens zwei einander gegenüberliegende Seiten des Gehäuses verbindet bzw. verbinden. Durch diese Maßnahmen werden in besonderem Maße frei schwingende Strecken des Gehäuses verkürzt, wodurch sich naturgemäß ebenfalls die Resonanzfrequenzen des Gehäuses erhöhen lassen.

Im Einzelnen gibt es eine Vielzahl von Möglichkeiten, das erfindungsgemäße Coriolis-Massedurchflussmessgerät auszugestalten und weiterzubilden. Dazu wird verwiesen, einerseits auf die den Patentansprüchen 1, 3 und 6 nach geordneten Patentansprüche, andererseits auf die folgende Beschreibung von Ausführungsbeispielen in Verbindung mit der Zeichnung. In der Zeichnung zeigen:
- Fig. 1: eine schematische Darstellung des erfindungsgemäßen Coriolis-Massedurchflussmessgerät in Aufsicht und Seitenansicht in Teilschnitt,
- Fig. 2: eine perspektivische Ansicht auf das Gehäuse des Coriolis-Massedurchflussmessgeräts und
- Fig. 3: eine Schnittdarstellung der elektromechanischen Steckerverbindung des Coriolis-Massedurchflussmessgeräts gemäß Fig. 2.

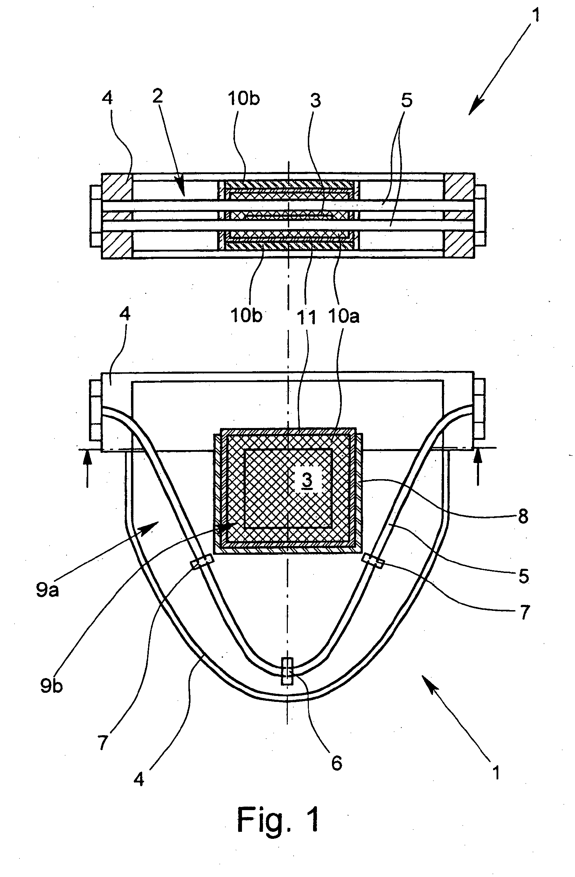

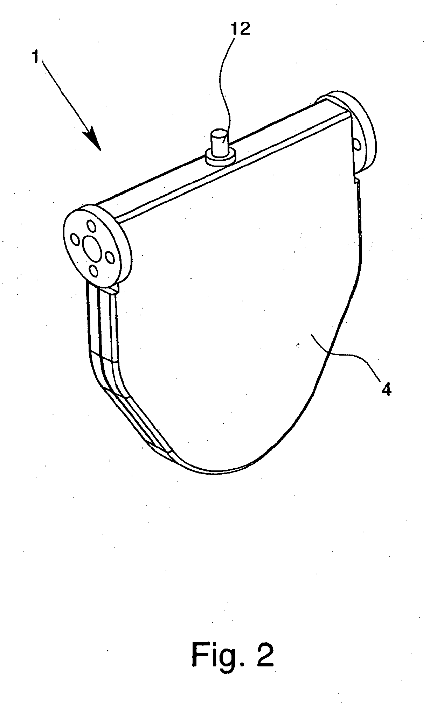

In den Fig. 1 und 2 ist jeweils dargestellt ein Coriolis-Massedurchflussmessgerät 1. Fig. 1 zeigt das Coriolis-Massedurchflussmessgerät schematisch einmal in einer Draufsicht (unten) und einmal in einer Seitenansicht (oben), jeweils in Schnitt bzw. Teilschnitt. Das dargestellte Coriolis-Massedurchflussmessgerät 1 umfasst drei große Baugruppen, nämlich die Sensoranordnung 2, einen Messumformer 3 und ein Gehäuse 4. Die Sensoranordnung 2 umfasst dabei vorliegend zwei zu Schwingungen anregbare Messrohre 5, einen Schwingungserzeuger 6 und zwei Schwingungsaufnehmer 7. Der Messumformer 3 umfasst die Auswerte- und Leistungselektronik zur Ansteuerung und messtechnischen Auswertung der Sensoranordnung, wobei diese Auswerte- und Leistungselektronik hier im Einzelnen nicht dargestellt ist, erkennbar ist lediglich schematisch, dass der Messumformer 3 auf einer Platine realisiert ist. Die dargestellten Coriolis-Massedurchflussmessgeräte 1 weisen Messrohre 5 auf, die V-förmig ausgestaltet sind, wobei der Messumformer 3 zwischen den V-Schenkeln der Messrohre 5 angeordnet ist, weshalb die Sensoranordnung 2 und der Messumformer 3 insgesamt benachbart zueinander angeordnet sind. Das Gehäuse 4 bildet eine äußere Hülle des Coriolis-Massedurchflussmessgeräts 1 und definiert daher das Volumen, in dem die benachbart zueinander angeordneten Komponenten Sensoranordnung 2 und Messumformer 3 untergebracht sind, was besonders gut in Fig. 2 zu erkennen ist.

Die relative Nähe zwischen Sensoranordnung 2 und Messumformer 3 bringt die Gefahr mit sich, dass sich die Sensoranordnung 2 und der Messumformer 3 in ungewollter Weise physikalisch beeinflussen. Eine solche Beeinflussung wird bei dem in Fig. 1 auch vom inneren Aufbau her dargestellten Coriolis-Massedurchflussmessgerät 1 zunächst dadurch verhindert, dass im Zwischenraum zwischen der Sensoranordnung 2 und dem Messumformer 3 eine thermische Barriere 8 angeordnet ist, die insbesondere den Wärmeübergang zwischen den Messrohren 5 und dem Messumformer 3 reduziert. In der unteren Darstellung von Fig. 1 ist gut zu erkennen, dass die thermische Barriere 8 jedenfalls überall dort eine Barriere zwischen der Sensoranordnung 2 und dem Messumformer 3 darstellt, wo eine direkte, kürzeste Verbindung zwischen der Sensoranordnung 2 und dem Messumformer 3 vorliegt. Die thermische Barriere 8 kann auch weiter erstreckt sein, von besonderer Wichtigkeit ist jedenfalls, dass sie in diesem Sinne im Zwischenraum zwischen der Sensoranordnung 2 und dem Messumformer 3 vorgesehen ist.

Die thermische Barriere 8 ist - wie in Fig. 1 erkennbar - so mit dem Gehäuse 4 verbunden, dass das Volumen des Gehäuses 4 in ein die Sensoranordnung 2 umfassendes erstes Teilvolumen 9a und ein den Messumformer 3 umfassendes zweites Teilvolumen 9b aufgeteilt ist; dabei kommt es nicht darauf an, dass das erste Teilvolumen 9a und das zweite Teilvolumen 9b überall getrennte Teilvolumina des gesamten durch das Gehäuse 4 definierten Volumens darstellen, dies ist nur von Wichtigkeit im zuvor definierten Zwischenraum zwischen der Sensoranordnung 2 und dem Messumformer 3.

Eine Entkopplung zwischen der Sensoranordnung 2 und dem Messumformer 3 wird aber nicht nur durch die zuvor beschriebene thermische Barriere 8 erreicht, sondern vielmehr auch durch eine thermische Brücke 10, die im Zwischenraum zwischen dem Messumformer 3 und dem Gehäuse 4 angeordnet ist und zur Abführung von Wärme von dem Messumformer 3 auf das Gehäuse 4 dient. So wird einerseits eine thermische Beeinflussung des Messumformers 3 durch insbesondere die Messrohre 5 der Sensoranordnung 2 mittels der thermischen Barriere 8 verhindert, andererseits aber auch für eine Möglichkeit der Wärmeabführung durch die thermische Brücke 10 gesorgt.

In Fig. 1 ist insbesondere in der oberen Darstellung gut zu erkennen, dass die thermische Brücke 10 zum einen realisiert ist durch einen thermisch leitenden Verguss 10a des Messumformers 3. Zum anderen ist die thermische Brücke 10 auch realisiert durch ein Versteifungselement 10b, was in Fig. 1 nur ganz schematisch dargestellt ist. Wichtig ist, dass insgesamt ein flächiger Kontakt mit dem Gehäuse 4 hergestellt ist durch das Versteifungselement 10b. Ein flächiger Kontakt zu dem Gehäuse 4 ist vorteilhaft für einen möglichst guten Wärmeübergang zu der Gehäusewand und hat auch mechanisch stabilisierende Funktion.

Bei dem in Fig. 1 dargestellten Coriolis-Massedurchflussmessgerät 1 ist aber nicht nur eine thermische Entkopplung realisiert, sondern vielmehr auch eine elektrische und magnetische Abschirmung 11, die um den Messumformer 3 im Zwischenraum zwischen dem Messumformer 3 und der Sensoranordnung 2 angeordnet ist. Die elektrische und magnetische Abschirmung 11 umgibt den Messumformer 3 bei dem dargestellten Coriolis-Massedurchflussmessgerät 1 nahezu vollständig, ist also auch im Zwischenraum zwischen dem Messumformer 3 und dem Gehäuse 4 angeordnet, wie aus der oberen Darstellung von Fig. 1 ersichtlich. Da die elektrische und magnetische Abschirmung 11 in diesem Fall auch in dem Weg steht, über den Wärmemenge auf das Gehäuse 4 übertragen wird, also im Zwischenraum zwischen dem Messumformer 3 und dem Gehäuse 4, besteht die elektrische und magnetische Abschirmung 11 vorliegend aus einem thermisch gut leitfähigen Material, nämlich aus einem weichmagnetischen Werkstoff mit hoher Permeabilität. Diese Eigenschaft der elektrischen und magnetischen Abschirmung 11 sorgt insbesondere dafür, dass der Einfluss der Auswerte- und Leistungselektronik, die veränderliche Magnetfelder und elektromagnetische Wechselfelder generiert, die asymmetrisch auf die Schwingungsaufnehmer 7 einkoppeln und die massestrombedingte Phasenverschiebung der Aufnehmersignale überdecken, gering bzw. ausgeschlossen ist. Umgekehrt ist der Einfluss des Schwingungserzeugers 6 und der Schwingungsaufnehmer 7, die von veränderlichen Magnetfeldern bzw. elektromagnetischen Wechselfeldern umgeben sind, auf den Messumformer 3 gering bzw. ausgeschlossen.

Das Coriolis-Massedurchflussmessgerät 1 gemäß den Fig. 1 und 2 verwirklicht insgesamt also verschiedene Maßnahmen, nämlich eine thermische Barriere 8, eine thermische Brücke 10 und eine elektrische und magnetische Abschirmung 11, wobei die thermische Brücke hier ebenfalls als rigides Versteifungselement wirkt, das das Gehäuse 4 durch innere rigide Verbindung der Gehäusewandungen mechanisch versteift. Andere, hier nicht dargestellte und nicht erfindungsgemäße Coriolis-Massedurchflussmessgeräte begnügen sich damit, beispielsweise nur eine thermische Barriere und zusätzlich eine thermische Brücke oder eine elektrische und/oder magnetische Abschirmung zu realisieren, verzichten also auf eine oder sogar zwei der vorliegend realisierten Maßnahmen.

Im vorliegenden Fall ist sowohl die thermische Barriere 8 als auch die thermische Brücke 10 - hier der Teil der thermischen Brücke 10, der als Versteifungselement 10b ausgestaltet ist - mit zwei einander gegenüberliegenden Seiten des Gehäuses 4 verbunden, so dass das Gehäuse 4 durch die Verbindung auch mechanisch versteift ist, was insgesamt der Stabilität der mechanischen Hülle in Form des Gehäuses 4 zuträglich ist, was aber auch dazu führt, dass die Resonanzfrequenzen des Gehäuses 4 aus dem Arbeitsfrequenzbereich des Coriolis-Massedurchflussmessgeräts 1 verschoben werden, insbesondere hin zu höheren Frequenzen. Hier ist darauf geachtet worden, dass die Resonanzfrequenzen des Gehäuses 4 durch die Verbindung mit der thermischen Barriere 8 und der thermischen Brücke 10 derart erhöht worden sind, dass die aufgrund einer Nachführungsregelung auch veränderliche Arbeitsfrequenz des Coriolis-Massedurchflussmessgeräts 1, also der Frequenz, mit der die Messrohre 5 durch den Schwingungserzeuger 6 angeregt werden, keinen störenden Einfluss haben kann. Bei dem dargestellten Coriolis-Massedurchflussmessgerät 1 gelingt dies deshalb auch besonders gut, weil die thermische Barriere 8 und die thermische Brücke 10 zusammen mit der magnetischen Abschirmung 11 zwei gegenüberliegende Flachseiten des Gehäuses 4 miteinander verbinden.

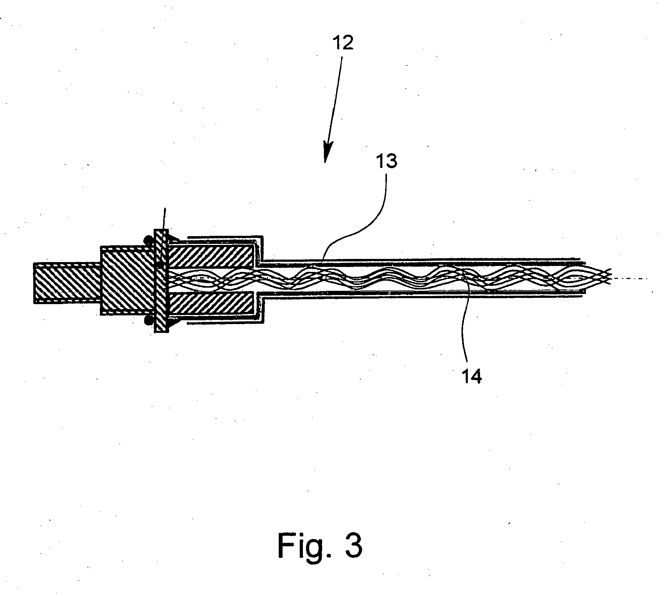

In der Fig. 1 nicht dargestellt ist die elektrische Verbindung zwischen dem Schwingungserzeuger 6 und den Schwingungsaufnehmern 7 zu dem Messumformer 3, die natürlich funktionsnotwendig vorhanden sein müssen. In Fig. 2 ist an der oberen Flachseite des Gehäuses 4 ein Stecker 12 dargestellt, der im Detail noch mal in schematischer Schnittdarstellung in Fig. 3 dargestellt ist. In diesen Stecker 12 sind über eine Abschirmung 13 mehrere verdrillte Leitungspaare 14 geführt, über die zum Beispiel Messsignale nach außen geführt werden können oder überhaupt von extern eine Datenkommunikation mit dem Messumformer realisiert werden kann, beispielsweise zu Diagnosezwecken oder zur Bereitstellung von Daten zu einer übergeordneten Prozesssteuerung.

## Patentansprüche

1. Coriolis-Massedurchflussmessgerät (1), mit wenigstens einer Sensoranordnung (2), wenigstens einem Messumformer (3) und wenigstens einem Gehäuse (4), wobei die Sensoranordnung (2) wenigstens ein zu Schwingungen anregbares Messrohr (5), wenigstens einen Schwingungserzeuger (6) und wenigstens einen Schwingungsaufnehmer (7) aufweist, wobei der Messumformer (3) zumindest teilweise die Auswerte- und Leistungselektronik zur Ansteuerung und messtechnischen Auswertung der Sensoranordnung aufweist, wobei die Sensoranordnung (2) und der Messumformer (3) benachbart zueinander in einem gemeinsamen durch das Gehäuse (4) definierten Volumen angeordnet sind,
**dadurch gekennzeichnet,**
**dass** zumindest im Zwischenraum zwischen der Sensoranordnung (2) und dem Messumformer (3) eine thermische Barriere (8) angeordnet ist,
**dass** zumindest im Zwischenraum zwischen dem Messumformer (3) und dem Gehäuse (4) eine thermische Brücke (10) zur Abführung von Wärme von dem Messumformer (3) auf das Gehäuse (4) angeordnet ist,
**dass** um den Messumformer (3) zumindest im Zwischenraum zwischen dem Messumformer (3) und der Sensoranordnung (2) eine elektrische und/oder magnetische Abschirmung (11) angeordnet ist,
und
**dass** die elektrische und/oder magnetische Abschirmung (11) zwischen einem inneren Teil der thermischen Brücke (10) und einem äußeren Teil der thermischen Brücke (10) angeordnet ist.

2. Coriolis-Massedurchflussmessgerät nach Anspruch 1, **dadurch gekennzeichnet, dass** die thermische Barriere (8) so mit dem Gehäuse (4) verbunden ist, dass das Volumen des Gehäuses (4) in ein die Sensoranordnung (2) umfassendes erstes Teilvolumen (9a) und ein den Messumformer (3) umfassendes zweites Teilvolumen (9b) aufgeteilt ist.

3. Coriolis-Massedurchflussmessgerät nach Anspruch 1, **dadurch gekennzeichnet, dass** die thermische Brücke zumindest teilweise durch einen thermisch leitenden Verguss (10a) des Messumformers (3) realisiert ist.

4. Coriolis-Massedurchflussmessgerät nach Anspruch 1 oder 3, **dadurch gekennzeichnet, dass** die thermische Brücke (10) zumindest teilweise durch ein Versteifungselement realisiert ist, insbesondere als flächig anliegendes Versteifungselement (10b), vorzugsweise als Edelstahlplatten.

5. Coriolis-Massedurchflussmessgerät nach Anspruch 1, **dadurch gekennzeichnet, dass** auch im Zwischenraum zwischen dem Messumformer (3) und dem Gehäuse (4) eine elektrische und/oder magnetische Abschirmung (11) angeordnet ist.

6. Coriolis-Massedurchflussmessgerät nach Anspruch 1 oder 5, **dadurch gekennzeichnet, dass** die elektrische und/oder magnetische Abschirmung (11) aus einem thermisch gut leitfähigen Material besteht, insbesondere aus einem weichmagnetischen Werkstoff hoher magnetischer Permeabilität.

7. Coriolis-Massedurchflussmessgerät nach einem der Ansprüche 1 bis 6, **dadurch gekennzeichnet, dass** das Messrohr (5) der Sensoranordnung (2) gebogen ist, insbesondere U- oder V-förmig ist und der Messumformer (3) zwischen den U- oder V-Schenkeln angeordnet ist.

8. Coriolis-Massedurchflussmessgerät nach wenigstens einem der Ansprüche 1 bis 7, **dadurch gekennzeichnet, dass** der innere Teil der thermischen Brücke (10) als den Messumformer (3) unmittelbar umgebender Verguss (10a) realisiert ist, und dass der äußere Teil der thermischen Brücke (10) als wenigstens ein Versteifungselement (10b) zwischen der elektrischen und/oder magnetischen Abschirmung (11) und dem Gehäuse (4) realisiert ist.

9. Coriolis-Massedurchflussmessgerät nach wenigstens einem der Ansprüche 1 bis 8, **dadurch gekennzeichnet, dass** die thermische Barriere (8) und/oder die thermische Brücke (10) und/oder die elektrische und/oder magnetische Abschirmung (11) mit dem Gehäuse (4) verbunden ist bzw. sind und das Gehäuse versteift bzw. versteifen.

10. Coriolis-Massedurchflussmessgerät nach Anspruch 9, **dadurch gekennzeichnet, dass** die thermische Barriere (8) und/oder die thermische Brücke (10) und/oder die elektrische und/oder magnetische Abschirmung (11) wenigstens zwei einander gegenüberliegende Seiten des Gehäuses (4) verbindet bzw. verbinden.

## Claims

1. Coriolis mass flowmeter (1) having at least one sensor arrangement (2), at least one measuring transducer (3) and at least one housing (4), wherein the sensor arrangement (2) has at least one measuring tube (5) that can be excited to oscillation, at least one oscillation generator (6) and at least one oscillation sensor (7), wherein the measuring transducer (3) features, at least partially, the evaluation and power electronics for actuation and metrological evaluation of the sensor arrangement, wherein the sensor arrangement (2) and the measuring transducer (3) are arranged adjacent to one another in a common volume defined by the housing (4),
**characterized in**
**that** a thermal barrier (8) is arranged at least in the space between the sensor arrangement (2) and the measuring transducer (3),
**that** a thermal bridge (10) is arranged at least in the space between the measuring transducer (3) and the housing (4) for discharging heat from the measuring transducer (3) to the housing (4),
**that** an electric and/or magnetic shielding (11) is arranged at least in the space between the measuring transducer (3) and the sensor arrangement (2),
and
**that** the electric and/or magnetic shielding (11) is arranged between an inner part of the thermal bridge (10) and an outer part of the thermal bridge (10).

2. Coriolis mass flowmeter according to claim 1, **characterized in that** the thermal barrier (8) is connected to the housing (4) such that the volume of the housing (4) is split into a first partial volume (9a) encompassing the sensor arrangement (2) and a second partial volume (9b) encompassing the measuring transducer (3).

3. Coriolis mass flowmeter according to claim 1, **characterized in that** the thermal bridge is implemented, at least in part, by a thermally conductive potting (10a) of the measuring transducer (3).

4. Coriolis mass flowmeter according to claim 1 or 3, **characterized in that** the thermal bridge (10) is implemented, at least in part, by a stiffening member, in particular as an planar, contiguous stiffening member (10b), preferably as stainless steel plates.

5. Coriolis mass flowmeter according to claim 1, **characterized in that** an electric and/or magnetic shielding (11) is also arranged in the space between the measuring transducer (3) and the housing (4).

6. Coriolis mass flowmeter according to claim 1 or 5, **characterized in that** the electric and/or magnetic shielding (11) consists of a thermally well conducting material, in particular of a magnetically soft material with high magnetic permeability.

7. Coriolis mass flowmeter according to any one of claims 1 to 6, **characterized in that** the measuring tube (5) of the sensor arrangement (2) is bent, in particular is U- or V-shaped and the measuring transducer (3) is arranged between the limbs of U or V.

8. Coriolis mass flowmeter according to at least one of the claims 1 to 7, **characterized in that** the inner part of the thermal bridge (10) is implemented as the potting (10a) directly surrounding the measuring transducer (3), and that the outer part of the thermal bridge (10) is implemented as at least one stiffening element (10b) between the electric and/or magnetic shielding (11) and the housing (4).

9. Coriolis mass flowmeter according to at least one of claims 1 to 8, **characterized in that** the thermal barrier (8), and/or the thermal bridge (10), and/or the electric and/or magnetic shielding (11) is/are connected to the housing (4) and stiffen/s the housing.

10. Coriolis mass flowmeter according to claim 9, **characterized in that** the thermal barrier (8), and/or the thermal bridge (10), and/or the electric and/or magnetic shielding (11) connect/s at least two opposing sides of the housing (4).

## Revendications

1. Débitmètre massique du type Coriolis (1), comprenant au moins un agencement de capteur (2), au moins un transducteur (3) et au moins un boîtier (4), l'agencement de capteur (2) présentant au moins un tube de mesure (5) pouvant être amené à osciller par excitation, au moins un générateur d'oscillations (6) et au moins un enregistreur d'oscillations (7), le transducteur (3) présentant au moins en partie l'électronique d'analyse et de puissance pour la commande et l'analyse par une technique de mesure de l'agencement de capteur, l'agencement de capteur (2) et le transducteur (3) étant disposés l'un à côté de l'autre dans un volume commun défini par le boîtier (4),
**caractérisé en ce que** :
au moins dans l'espace intermédiaire entre l'agencement de capteur (2) et le transducteur (3) est disposée une barrière thermique (8),
au moins dans l'espace intermédiaire entre le transducteur (3) et le boîtier (4) est disposé un pont thermique (10) pour l'évacuation de la chaleur provenant du transducteur (3) vers le boîtier (4),
au moins dans l'espace intermédiaire entre le transducteur (3) et l'agencement de capteur (2) autour du transducteur (3) est disposé un blindage électrique et/ou magnétique (11),
et
le blindage électrique et/ou magnétique (11) est disposé entre une partie intérieure du pont thermique (10) et une partie extérieure du pont thermique (10).

2. Débitmètre massique du type Coriolis selon la revendication 1, **caractérisé en ce que** la barrière thermique (8) est connectée au boîtier (4) de telle sorte que le volume du boîtier (4) soit divisé en un premier volume partiel (9a) comprenant l'agencement de capteur (2) et un deuxième volume partiel (9b) comprenant le transducteur (3).

3. Débitmètre massique du type Coriolis selon la revendication 1, **caractérisé en ce que** le pont thermique est réalisé au moins en partie par un surmoulage thermoconducteur (10a) du transducteur (3).

4. Débitmètre massique du type Coriolis selon la revendication 1 ou 3, **caractérisé en ce que** le pont thermique (10) est réalisé au moins en partie par un élément de rigidification, en particulier sous forme d'élément de rigidification s'appliquant à plat (10b), de préférence sous forme de plaques en acier inoxydable.

5. Débitmètre massique du type Coriolis selon la revendication 1, **caractérisé en ce qu'**un blindage électrique et/ou magnétique (11) est également disposé dans l'espace intermédiaire entre le transducteur (3) et le boîtier (4).

6. Débitmètre massique du type Coriolis selon la revendication 1 ou 5, **caractérisé en ce que** le blindage électrique et/ou magnétique (11) se compose d'un matériau bon conducteur thermique, en particulier d'un matériau magnétique doux de grande perméabilité magnétique.

7. Débitmètre massique du type Coriolis selon l'une quelconque des revendications 1 à 6, **caractérisé en ce que** le tube de mesure (5) de l'agencement de capteur (2) est courbe, en particulier est en forme de U ou en forme de V, et le transducteur (3) est disposé entre les branches du U ou du V.

8. Débitmètre massique du type Coriolis selon au moins l'une quelconque des revendications 1 à 7, **caractérisé en ce que** la partie intérieure du pont thermique (10) est réalisée sous forme de surmoulage (10a) entourant directement le transducteur (3), et **en ce que** la partie extérieure du pont thermique (10) est réalisée sous forme d'au moins un élément de rigidification (10b) entre le blindage électrique et/ou magnétique (11) et le boîtier (4).

9. Débitmètre massique du type Coriolis selon au moins l'une quelconque des revendications 1 à 8, **caractérisé en ce que** la barrière thermique (8) et/ou le pont thermique (10) et/ou le blindage électrique et/ou magnétique (11) est/sont connecté (e) (s) au boîtier (4) et rigidifie (nt) le boîtier.

10. Débitmètre massique du type Coriolis selon la revendication 9, **caractérisé en ce que** la barrière thermique (8) et/ou le pont thermique (10) et/ou le blindage électrique et/ou magnétique (11) relie(nt) au moins deux côtés mutuellement opposés du boîtier (4).
